# EUROPEAN PATENT APPLICATION

(11) **EP 0 860 777 A2**
(43) Date of publication of application: **26.08.1998**
(21) Application number: 98103123.0
(22) Date of filing: 23.02.1998
(51) Int. Cl.: G06F 11/18

(54) **Fault tolerant data processing system and method therefor**

(30) Priority: 25.02.1997 JP 40950/97
(71) Applicant: NEC CORPORATION, Tokyo (JP)
(72) Inventor: Oki, Fumio, Minato-ku, Tokyo (JP)
(74) Representative: VOSSIUS & PARTNER

(57) **Abstract**

A fault tolerant data processing system includes first, second, and third systems constituting a triplex arrangement. The first and second systems include first and second data processing units for performing the same data processing, first and second storage units from/in which data is read/written in accordance with data processing, and first and second fault tolerant units each connected to the data processing unit and the storage unit and having an input/output interface function of exchanging data with a front-end apparatus and a fault tolerant function of separating a system in which an abnormality has occurred and switching to a normal system. The third system includes a third data processing unit for performing the same data processing as that in the first and second data processing units, a third storage unit from/in which data is read/written in accordance with data processing, and a third fault tolerant unit connected to the data processing unit and the storage unit and having a fault tolerant function. The first to third fault tolerant units are connected to each other to communicate data used for the fault tolerant functions. A fault tolerant data processing method is also disclosed.

## Description

The present invention relates to a fault tolerant data processing system and method and, more particularly, to a fault tolerant data processing system formed by adding a general data processing unit and an external storage unit to a fault tolerant unit, and a method for the system.

In general, a fault tolerant data processing system is constituted by a plurality of processing units having the same function. In this system, when a fault occurs, the faulty processing unit is instantaneously disconnected, and the processing is continued by another normal processing unit. Since a fault tolerant data processing system of this type is designed as a special system for a fault tolerant operation, a processor, a memory, an input/output unit, and an operating system constituting each processing unit have special arrangements.

A technique of improving such a fault tolerant data processing system is disclosed in Japanese Patent Laid-Open No. 3-6742. According to this technique, a non-fault tolerant system which has already been used is incorporated in a fault tolerant system to construct a fault tolerant data processing system.

Fig. 9 shows the conventional fault tolerant data processing system disclosed in this reference. Referring to Fig. 9, a non-fault tolerant system is incorporated in a fault tolerant system to allow the operating system and application programs of the non-fault tolerant system to operate. More specifically, processor modules 1 each including a pair of 68020 processors 2 of a fault tolerant system and a comparator 3 connected to the pair of 68020 processors 2 to detect a fault are duplexed. The processor modules 1 are connected to each other through a duplex system bus 4. Other processing units (not shown) are also connected to these modules through this duplex system bus 4.

A pair of S/370 processors 6 of a non-fault tolerant system are directly connected to the pair of 68020 processors 2, respectively. A comparator 7 for detecting a fault is also connected to the pair of S/370 processors 6 to constitute a processor module 5. Such processor modules 5 are duplexed in correspondence with the processor modules 1.

Fault detection for the processor modules 1 and 5 is performed by incoincidence detection performed by the comparators 3 and 7. Fault detection for other function units is performed by a check logic. Reference numerals 2a and 6a denote bus interface logics; 6b, a storage control logic; and 8, a storage unit including the check logic.

With this arrangement, a non-fault tolerant system which has already been used can be operated as a fault tolerant system without greatly changing application programs.

A conventional fault tolerant system is constituted by dedicated hardware, a dedicated operating system, and dedicated application software. Special knowledge is required to develop an application of this system, and it takes many steps for the development.

According to the technique disclosed in the above reference, a non-fault tolerant system is incorporated in a fault tolerant system to allow the operating system of the non-fault tolerant system to operate, thereby allowing use of existing applications. The hardware arrangement of this system is, however, complicated.

In addition, the conventional fault tolerant system demands a very complicated apparatus arrangement. For example, to prevent data from being contaminated upon occurrence of a fault, a mechanism for operation clock synchronization, a duplex system bus, and a system bus switching circuit are required. With this arrangement, an operation from fault detection to switching of function units is instantaneously performed to prevent a fault in one function unit from affecting other function units. In addition, a re-synchronization mechanism for re-connecting a disconnected function unit is required. A re-synchronization mechanism for restoring a processor module from an asynchronous operation is especially complicated. That is, this system uses a method of stopping a processor module in operation first, and then simultaneously starting two processors after copying the internal states of the processor and the processor module to the inactive processor module. This operation is performed by both software and hardware.

It is an object of the present invention to provide a fault tolerant data processing system having simple circuit and apparatus arrangements, and a method for the system.

In order to achieve the above object, according to the present invention, there is provided a fault tolerant data processing system comprising first, second, and third systems constituting a triplex arrangement, the first and second systems including first and second data processing means for performing the same data processing, first and second storage means from/in which data is read/written in accordance with data processing, and first and second fault tolerant means each connected to the data processing means and the storage means and having an input/output interface function of exchanging data with a front-end apparatus and a fault tolerant function of separating a system in which an abnormality has occurred and switching to a normal system, and the third system including third data processing means for performing the same data processing as that in the first and second data processing means, third storage means from/in which data is read/written in accordance with data processing, and third fault tolerant means connected to the data processing means and the storage means and having a fault tolerant function, wherein the first to third fault tolerant means are connected to each other to communicate data used for the fault tolerant functions.

### Brief Description of the Drawings

Fig. 1 is a block diagram showing the arrangement of a fault tolerant data processing system according to an embodiment of the present invention;
Fig. 2 is a block diagram showing the arrangement of a fault tolerant unit (FTU) in Fig. 1;
Fig. 3 is a block diagram showing a supervisory control unit in Fig. 1;
Fig. 4 is a flow chart for explaining data input processing in the data processing system in Fig. 1;
Fig. 5 is a flow chart for explaining output message processing in the data processing system in Fig. 1;
Fig. 6 is a state transmission diagram showing a state transition which each system can undergo;
Fig. 7 is a flow chart showing data copy processing in re-synchronization processing in the data processing system in Fig. 1;
Fig. 8 is a flow chart showing file write processing in re-synchronization processing in the data processing system in Fig. 1; and

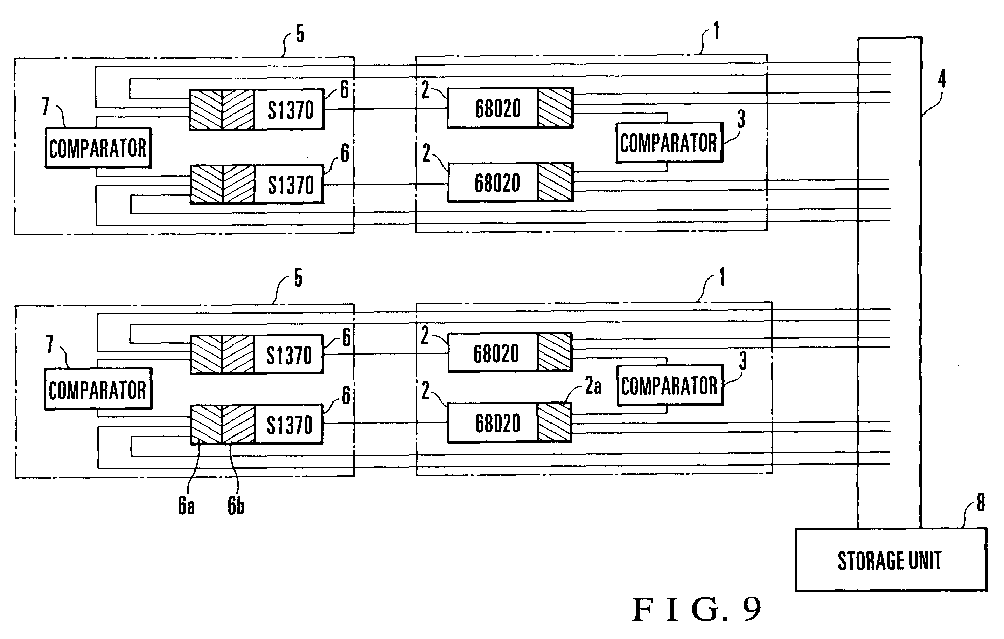

Fig. 9 is a block diagram showing a conventional fault tolerant system.

### Description of the Preferred Embodiment

The present invention will be described in detail below with reference to the accompanying drawings.

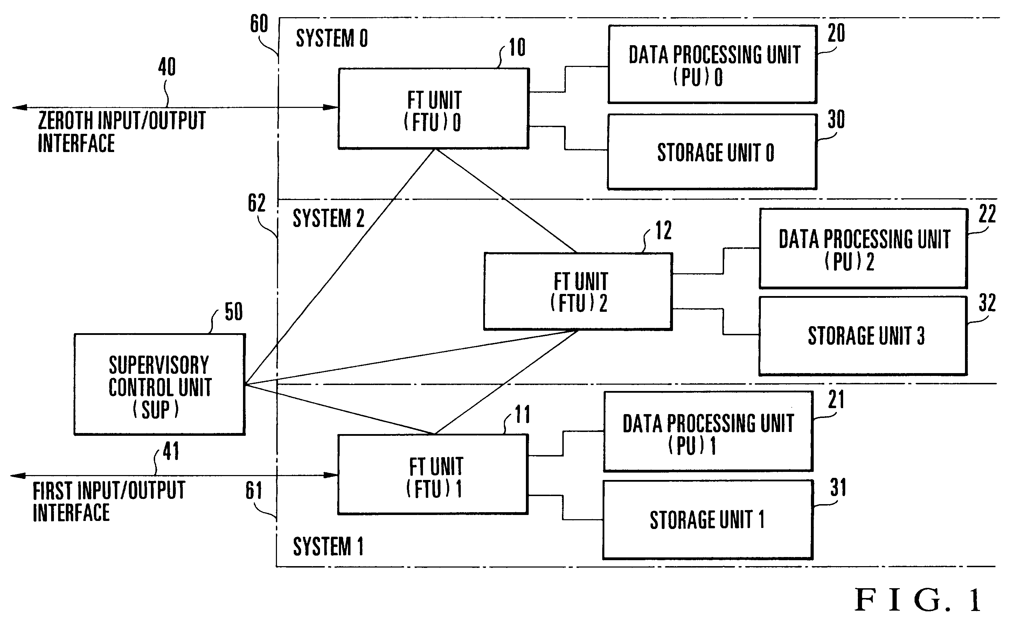

Fig. 1 shows a fault tolerant data processing system of the present invention. Referring to Fig. 1, a system-0 module 60 is constituted by a fault tolerant unit (FTU) 10 having a fault tolerant function, a processing unit (PU) 20 connected to the FTU 10 through a communication means (to be described later) and constituted by a general personal computer or workstation, and a storage unit 30. Similarly, system-1 and system-2 modules 61 and 62 are respectively constituted by FTUs 11 and 12, PUs 21 and 22 connected to the FTUs 11 and 12 through communication means, and storage units 31 and 32. In this embodiment, the system-0 to system-2 modules 60 to 62 constitute a triplex fault tolerant data processing apparatus.

The FTUs 10 to 12 of the respective systems are connected to each other through the communication means to be described later, and are also connected to a supervisory control unit (SUP) 50 having an operation function through a communication means. The system-0 and system-1 FTUs 10 and 11 respectively have input/output interfaces for front-end apparatuses.

As the communication means, various types of means, e.g., a means for directly coupling an internal bus to the above units and a means having a protocol as in a LAN (Local Area Network), are available. Any means can be used. Referring to Fig. 1, the communication lines are expressed in a one-to-one connection form. If, however, a communication means in a bus form is to be used, many units are connected to one bus. Referring to the illustration of Fig. 1, one communication line is provided for each pair of a data processing unit and a storage unit. However, these communication lines may be combined into one line, or each communication line may be separated into a plurality of lines depending on the application purposes or traffics.

In this embodiment, a SCSI (Small Computer System Interface) is used as a communication means between the FTUs 10 to 12 and the storage units 30 to 32, and a LAN (10BASE-T) is used for other components. In addition, general personal computers or workstations are used as the PUs 20 to 22, and hard disk units are used as the storage units 30 to 32.

This embodiment exemplifies a system having a triplex arrangement. This arrangement is employed to perform fault detection by a majority logic based on a comparison between outputs from the respective systems and comply with the unit of maintenance upon occurrence of a fault (faults are separated in units of systems). That is, this arrangement is designed to allow self-checking or repair to a faulty system in an offline state. The communication means are selected to loosely couple the respective modules to each other so as to minimize the influences of a fault in a given module or replacement of components on other modules.

In this embodiment, the SUP 50 has the centralized supervisory control function. Such a function may be distributed among the FTUs 10 to 12, or the system-2 FTU 12 may have an input/output interface for a front-end apparatus.

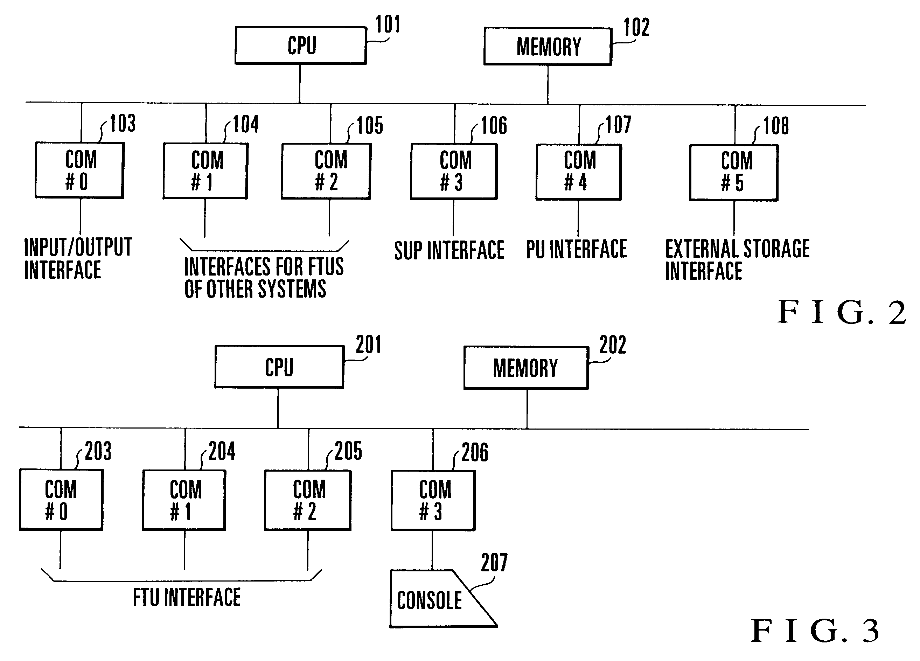

Fig. 2 shows the arrangement of each of the FTUs 10 to 12 of the respective systems.

Each system is constituted by a simple processor unit including a processor (CPU) 101 and a memory 102, and also has a plurality of communication means (COMS) 103 to 108. The zeroth COM 103 is a communication means for a front-end apparatus, and interfaces to it using a LAN. The first and second COMs 104 and 105 are communication means for the FTUs of the remaining systems, and interface to them using the LAN. The third COM 106 is a communication means for the SUP, and interfaces to it using the LAN. The fourth COM 107 is a communication means for the PU, and interfaces to it using the LAN. The fifth COM 108 is a communication unit for the storage unit, and interfaces to it using the SCSI.

Fig. 3 shows the arrangement of the SUP 50 in Fig. 1.

The SUP 50 is constituted by a simple processor unit including a processor (CPU) 201 and a memory 202, and also has a plurality of communication means (COMs) 203 to 206. The zeroth to second COMs 203, 204, and 205 are communication means for the FTUs 10 to 12 of the respective systems, and interface to them using the LAN. The third COM 206 is a communication means for a console 207 as an input/output means, and interfaces to it using the RS-232 interface.

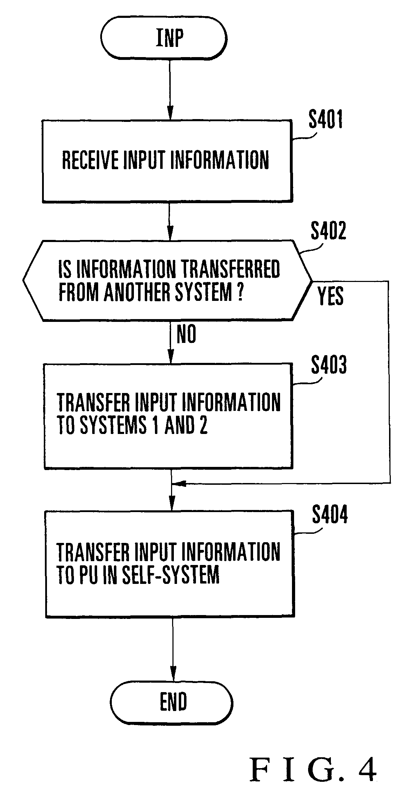

The operation of the fault tolerant data processing system having the above arrangement will be described next with reference to Fig. 4. Fig. 4 explains the input message processing to be performed when the data input from a front-end apparatus is processed. There are input/output interfaces of two systems. One system operates as an act system, and the other system operates as a standby system. Assume that the FTU 10 (system-0) belongs to the act system, and the FTU 11 belongs to the standby system.

Referring to Fig. 4, a processing request from the front-end apparatus arrives as an input message at the FTU 10 of the act system through the input/output interface (step S401). Upon reception of the input message, the FTU 10 identifies the message as a message input from the self-system or transferred from another system (step S402). If the message is identified as a message input from the self-system, the input message is transferred to the two remaining systems, i.e., the system-1 and system-2 FTUs 11 and 12 (step S403). If the message is identified as a message form another system in step S402, the message is not transferred to the remaining systems.

The input message from another system to the FTU 10 is transferred to the PU 20 of the self-system (step S404). The input messages transferred from system 0 to systems 1 and 2 are respectively transferred from the FTUs 11 and 12 to the PUs 20 and 21. Data processing is then performed for the messages by application programs in the PUs 20 to 22 of the respective systems, and the results are returned as output messages to the FTUs 10 to 12. At this time, a data write/read is performed with respect to the storage units 30 to 32 in accordance with the data processing.

The output messages processed in the respective systems and output are compared with each other in the FTUs 10 to 12. The output message whose normality has been confirmed is returned to the front-end apparatus. If the normality of the message is not confirmed, a fault processing program is started.

In the respective systems, in the process of processing, the PUs 20 to 22 transmit file read/write requests for the storage units 30 to 32 to the FTUs 10 to 12, the FTUs 10 to 12 perform relay processing to relay the requests to the storage units 30 to 32.

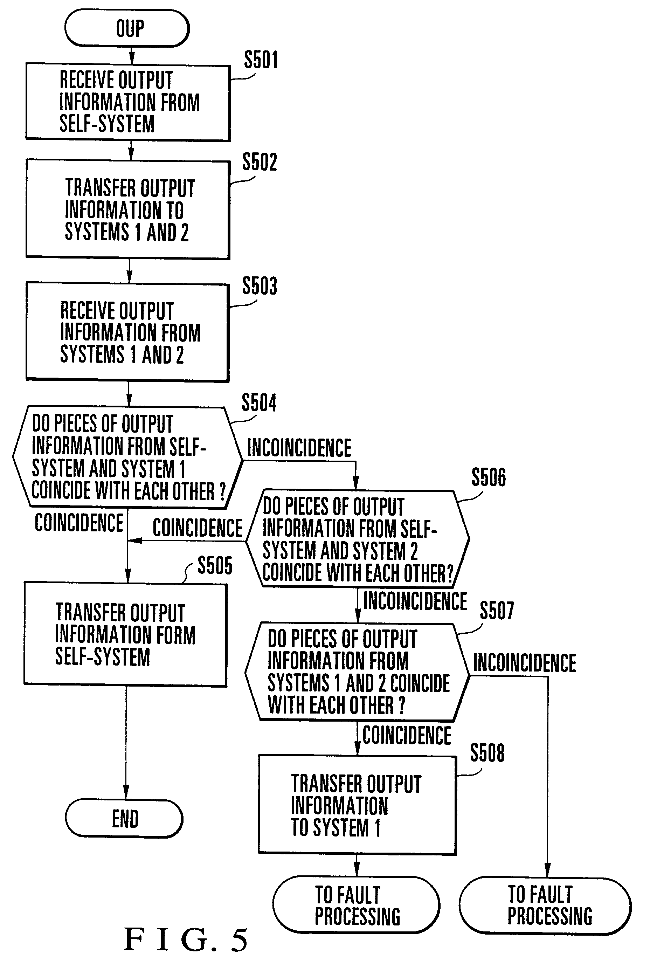

Fig. 5 explains output message processing. In performing fault detection in this system, the output messages output from the respective systems are compared with each other, and a faulty system is specified by majority logic.

First of all, each of the FTUs 10 to 12 receives an output message indicating the processing result obtained by the self-system from a corresponding one of the PUs 20 to 22 (step S501). The output message from the self-system is transferred to each of the remaining systems. That is, system 0 as an act system transfers the output message from the self-system to the system-1 and system-2 FTUs 11 and 12 (step S502). Since the remaining systems perform similar processing, the system-0 FTU 10 receives output messages from systems 1 and 2 (step S503). In this manner, system 0 as an act system receives the processing results obtained in the respective systems, and compares the contents of the results as follows.

First of all, the output messages from the self-system (system 0) and system 1 are compared with each other (step S504). If the contents of the messages coincide, since two of the three messages coincide (system 0 = system 1), it is determined that the output from the self-system is normal. The output message from the self-system is therefore returned to the front-end apparatus (step S505).

If the comparison result indicates incoincidence in step S504, the output messages from the self-system (system 0) and system 2 are compared with each other (step S506). If the contents of the messages coincide in this step, since two of the three messages (system 0 = system 2) coincide with each other, it is determined that the output from the self-system is normal. The output message from the self-system is therefore returned to the front-end apparatus (step S505).

If the comparison result indicates incoincidence in step S506, it is determined that some fault has occurred in the system.

The output messages from systems 1 and 2 are compared with each other (step S507). If it is determined in this step that the contents of the messages coincide with each other, since two of the three messages coincide with each other (system 1 = system 2), it is determined that the outputs from the remaining systems are normal. The output message from one (system 1) of the remaining systems is therefore returned to the front-end apparatus (step S508). Then, the self-system (system 0) is specified as a faulty system, and the flow shifts to fault processing.

If the comparison result indicates incoincidence in step S507, since the outputs from all the systems differ from each other, the flow also shifts to fault processing. In this case, however, no faulty system can be specified.

The state transition of each system controlled by the SUP 50 on the basis of the comparison result obtained in the act system and separation of a faulty system will be described next.

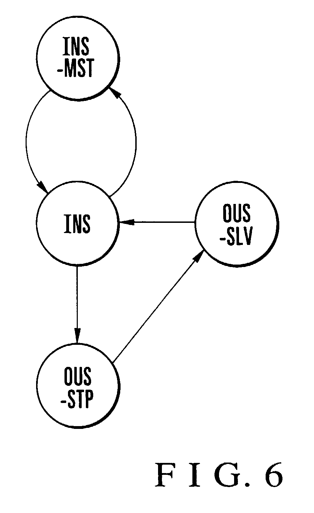

Fig. 6 shows the state transition of this system. Referring to Fig. 6, "INS (In Service)" indicates a normal in-service state, and "INS-MST (Master)" as an act system and "INS" as a standby system synchronously operate to match the timings of data in the processors, the storage units, and the like. These systems are systems 0 and 1. In addition, "OUS (Out of Service)" indicates an out-of-service state, "OUS-STP (Stop)" indicates a processing stop state in which no input message can be received, and "OUS-SLV (Slave)" indicates a state in which an input message can be received, but cannot be written in the storage unit.

A system specified as a faulty system shifts to "OUS-STP" to stop processing. More specifically, if system 0 is specified as a faulty system, system 0 in "INS-MST" shifts to "OUS-STP", system 1 in "INS" shifts to "INS-MST", and system 2 remains in "INS".

A faulty portion of a faulty system is specified by the diagnosis function of the SUP 50, and repaired. Thereafter, the system is connected to the system again to be restored to a serviceable state. This processing is called re-synchronization processing. In re-synchronization processing, a faulty system in "OUS-STP" is set to "OUS-SLV" to copy files from a system in service although the faulty system is in the out-of-service state. With this processing, the faulty system is shifted to "INS" after the contents of data in the storage units and the like are matched with each other.

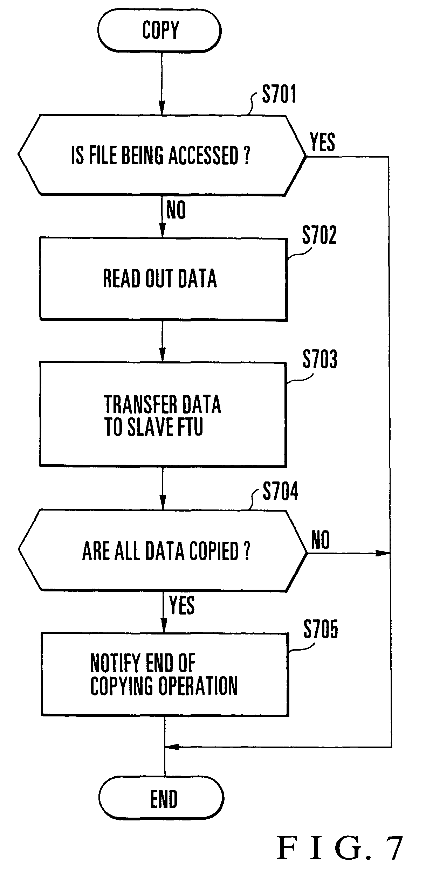

Fig. 7 shows a procedure for copying the data in the storage unit of a system in "INS-MST" to a system in "OUS-SLV". Since this data copying operation is performed concurrently with online processing, data is read out and transferred only in an interval in which the source file is in an idle state.

More specifically, it is checked whether the file in the system in "INS-MST" is being accessed (step S701). If the file is not being accessed, data is read out from the file in the system in "INS-MST" (step S703), and transferred to the storage unit in the system in "OUS-SLV". It is then checked whether all data are completely copied (step S704), and the end of the copying operation is notified (step S705). If it is determined in step S701 that the file is being accessed, or it is determined in step S704 that all the data are completely copied, the processing is terminated.

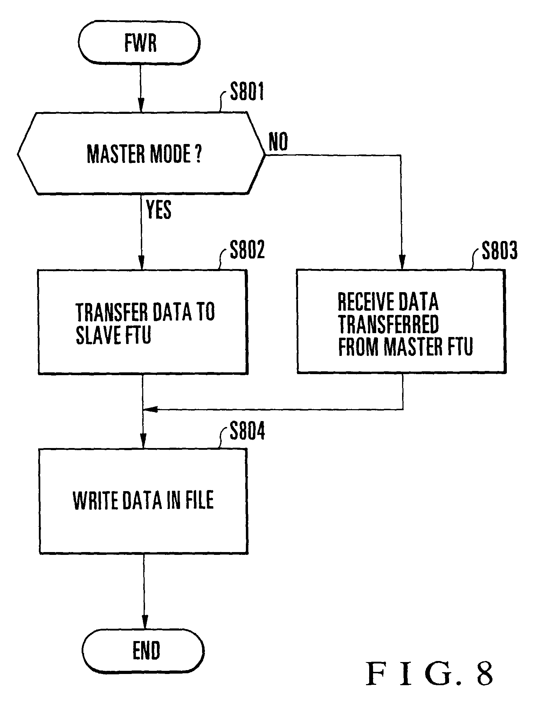

File write processing must be performed sometimes in the process of copy processing. In this case, the file write processing in Fig. 8 is performed. First of all, it is checked whether the self-system is either a master system (MST) or slave system (SLV) (step S801). If the self-system is in "INS-MST", the data to be written is transferred to the system in "OUS-SLV" (step S802). If the self-system is in "OUS-SLV", the data transferred from the system in "INS-MST" is written in the file (step S803). After steps S802 and S803, the data is written in the file in the storage unit in each system (step S804).

When the copy processing is complete, the internal data in process in the systems in "INS-MST" and "OUS-SLV" must be matched with each other. In this case, the operation of the system in "INS-MST" is temporarily stopped, and all the internal data in process are saved in the storage unit (write processing). This operation of the system in "INS-MST" is the same as the file write processing in Fig. 8. That is, the data to be written is also transferred to the system in "OUS-SLV", and the internal data in the system in "OUS-SLV" can be matched with the internal data in the system in "INS-MST" by this processing.

With the above processing, the contents stored in the system in "OUS-SLV" are matched with those in the system in "INS-MST". When, therefore, the application programs in both the systems in this state are restarted, the system in "OUS-SLV" shifts to "INS".

As described above, the SUP 50 has the centralized function for maintenance and operation, e.g., diagnosis in fault processing, a change in system arrangement, and state management.

In the procedure described above, when all the output messages from the respective systems differ from each other, countermeasures against a serious fault may be taken. In some case, all the systems may be stopped. In a system including three systems, the occurrence of such a fault can be considered as a rare case.

In the fault tolerant data processing system of this embodiment, each FTU has the centralized special function associated with fault tolerant processing.

More specifically, the main functions of each FTU are: a fault detection function, a faulty unit separation function, and re-synchronization of a unit.

The fault detection function is executed to only compare output messages from the respective systems constituting the system and determine a faulty unit on the basis of a majority logic. However, an operation check function at the operation clock level is omitted. That is, this system allows contamination of data in a given unit to affect other units when fault detection is delayed upon occurrence of a fault. This eliminates the necessity to perform synchronous operations at the operation clock level, and allows the use of general-purpose computers.

Since the range in which data is contaminated upon occurrence of a fault extends, management for each unit is omitted, and the faulty unit separation function is performed to stop the operation of the overall system in which a fault has been detected. With this function, the fault tolerant unit is only required to stop distribution of an input message to the faulty system, and no bus switching mechanism is required.

The re-synchronization function is designed such that each fault tolerant unit has the function of managing an external storage unit to match the contents of an active external storage unit with the contents of an inactive external storage unit, and the application programs in all the systems are restarted afterward. With this function, neither hardware nor software is required to match the internal states of the processor modules with each other.

In addition, since each system of the triplex system is set as the unit of separation upon occurrence of a fault, these functions can be simplified into basically necessary functions, which can be implemented with a small amount of hardware and software.

Furthermore, since personal computers and hard disk units can be used as PUs and storage units, application programs can be easily developed, and such programs need not be large in scale. The cost required to realize a triplex system is lower than that required for the conventional fault tolerant system.

In the above embodiment, the comparison results obtained in systems 1 and 2 are returned to system 0 as the act system, and the system-0 FTU 10 compares the output messages from the respective systems. However, the comparison results obtained in the respective systems may be directly transmitted to the SUP 50, and comparison processing may be performed by the SUP 50.

As has been described above, according to the fault tolerant data processing system of the present invention, the data processing units and the external storage units need not have any special functions for fault tolerant processing, the data processing units and the external storage units can be implemented by general-purpose computers. In addition, an application program can be operated on a general operation system, development of application programs is facilitated. Furthermore, the fault tolerant unit can be realized by small-scale hardware and software.

## Claims

1. A fault tolerant data processing system characterized by comprising first, second, and third systems (60 - 62) constituting a triplex arrangement,
said first and second systems including
first and second data processing means (20, 21) for performing the same data processing,
first and second storage means (30, 31) from/in which data is read/written in accordance with data processing, and
first and second fault tolerant means (10, 11) each connected to said data processing means and said storage means and having an input/output interface function of exchanging data with a front-end apparatus and a fault tolerant function of separating a system in which an abnormality has occurred and switching to a normal system, and
said third system including
third data processing means (22) for performing the same data processing as that in said first and second data processing means,
third storage means (32) from/in which data is read/written in accordance with data processing, and
third fault tolerant means (12) connected to said data processing means and said storage means and having a fault tolerant function,
wherein said first to third fault tolerant means are connected to each other to communicate data used for the fault tolerant functions.

2. A system according to claim 1, wherein one of said first and second systems corresponding to said first and second fault tolerant means having the input/output interface functions is set in an act state to transmit/receive data to/from the front-end apparatus, perform data transfer to said remaining systems, and receive processing results,
said two remaining systems are set in a standby state to process the data transferred from said system in the act state and return the data processing results, and
when a fault has occurred in one of said first to third systems, a system specified as a faulty system is separated and caused to stop data processing, and data processing is continued by said remaining systems.

3. A system according to claim 2, wherein one of said first and second fault tolerant means which corresponds to said system in the act state compares the data processing result obtained in said self-system with the data processing results returned from said remaining systems, outputs the processing results from at least two systems whose processing results are identical to each other as output information, and specifies one system whose processing result differs from the processing results from said remaining systems as a faulty system.

4. A system according to claim 3, wherein each of said first to third systems is set in one of an in-service master state in which said system operates in an act state, an in-service state in which said system operates in a standby state, an out-of-service state in which said system is separated from a flow of data processing and temporarily stops operating, and an out-of-service slave state in which said system is separated from a flow of data processing but copies data from a system in the in-service master state, and
a system specified as a faulty system is set in the out-of-service state.

5. A system according to claim 4, wherein said system set in the out-of-service state is set in the out-of-service slave state after fault repair processing to copy data from said system in the in-service master state so as to match contents of said storage means with each other, and is then set in the in-service state by restarting application programs in said two systems.

6. A system according to claim 5, further comprising supervisory control means (50), connected to said first to third fault tolerant means, for detecting a faulty system, diagnosing a fault in said faulty system, and setting each of said first to third systems in one of the in-service master state, the in-service state, the out-of-service state, and the out-of-service slave state.

7. A system according to claim 6, further comprising:
first communication means (104, 105) for connecting said first to third fault tolerant means to each other; and
second communication means (106, 203 - 205) for connecting said supervisory control means and said first to third fault tolerant means to each other.

8. A fault tolerant data processing system characterized by comprising three systems (60 - 62) constituting a triplex arrangement, at least two of said three systems having input/output interface functions of exchanging data with front-end apparatuses,
each of said third systems including
data processing means (20, 21, 22) for performing the same data processing,
storage means (30, 31, 32) from/in which data is read/written in accordance with data processing, and
fault tolerant means (10, 11, 12) each connected to said data processing means and said storage means and having a fault tolerant function of separating a system in which an abnormality has occurred and switching to a normal system,
wherein said fault tolerant means are connected to each other to communicate data used for the fault tolerant functions.

9. A fault tolerant data processing method of separating a system, of three systems (60 - 62) constituting a triplex arrangement, in which an abnormality has occurred, and switching to a normal system, characterized by comprising the steps of:
transferring data input from a front-end apparatus from one of said three systems which is set in an act state to said two remaining systems set in a standby state;
performing the same data processing in said self-system and said remaining systems on the basis of the data from the front-end apparatus and the transferred data;
comparing the data processing result obtained in said self-system and the data processing results returned from said remaining systems;
outputting the processing results from at least two systems whose processing results are identical to each other as output information;
specifying one system whose processing result differs from the processing results from said remaining systems as a faulty system; and
setting said system specified as the faulty system in an out-of-service state in which said system is separated from a flow of data processing and stops operating.

10. A method according to claim 9, further comprising the steps of:
monitoring fault repair processing in said system in the output-of-service state;
copying all data from said system in the act state to said system in the out-of-service state after fault repair processing; and
setting said system in the out-of-service state to a standby state by restarting application programs in said two systems after all the data are copied.
